# FASCICULE DE BREVET EUROPEEN

(11) **EP 2 480 355 B1**
(45) Date de publication et mention de la délivrance du brevet: **19.06.2013**
(21) Numéro de dépôt: 10763774.6
(22) Date de dépôt: 30.08.2010
(51) Int. Cl.: F16L 33/025, B21D 53/36, F16B 2/08, F16B 2/20, F16L 33/035

(54) **COLLIER DE SERRAGE ET SON PROCEDE DE FABRICATION.**
KLEMMRING UND DESSEN HERSTELLUNGSVERFAHREN
CLAMPING COLLAR AND METHOD OF MANUFACTURE THEREOF

(30) Priorité: 24.09.2009 FR 0956603
(43) Date de publication de la demande: 01.08.2012
(73) Titulaire: Etablissements Caillau, 92130 Issy-les-Moulineaux (FR)
(72) Inventeur: FOUQUERAY, Cyriaque, F-41200 Romorantin (FR); BEAUVAIS, Julien, F-41200 Romorantin (FR); LACHE, Christophe, F-41200 Romorantin (FR)
(74) Mandataire: Intès, Didier Gérard André
(86) Numéro de dépôt international: PCT/FR2010/051800
(87) Numéro de publication internationale: WO 2011/036365

(56) Documents cités:
- EP-A1- 0 344 050
- WO-A1-02/50468
- WO-A1-92/03682
- GB-A- 430 142

## Description

La présente invention concerne un collier de serrage comprenant une ceinture métallique ayant, au voisinage d'une première extrémité, une oreille saillante et, au voisinage d'une deuxième extrémité, un crochet présentant une paroi avant destinée à être retenue derrière l'oreille alors que le crochet est accroché sur l'oreille pour maintenir le collier à l'état serré, une partie arrière de l'oreille, opposée au crochet, présentant une saillie de centrage.

Un collier de serrage de ce type est connu, par exemple par les demandes de brevet n° FR 2 705 411 et EP 0 737 114 au nom de la demanderesse. Pour maintenir le collier à l'état fermé et serré, le crochet passe par-dessus l'oreille et sa paroi avant vient s'accrocher derrière l'oreille. La saillie de centrage sert à centrer le crochet par rapport à l'oreille, c'est-à-dire à aligner ces deux éléments par rapport à l'axe longitudinal de la ceinture métallique.

Pour éviter toute confusion, on précise que l'on désignera ci-après par axe du collier, l'axe passant par le centre de la ceinture, et dirigé selon la largeur de la ceinture. En revanche, on appellera axe longitudinal de la ceinture, l'axe qui, lorsque la ceinture est mise à plat avant son enroulement, s'étend selon la longueur de cette ceinture, perpendiculairement à sa largeur. Lorsque la ceinture est enroulée, l'axe longitudinal de la ceinture forme un cercle centré par rapport à la largeur de la ceinture.

La paroi avant du crochet présente une conformation adaptée à coopérer avec cette saillie de centrage. Dans l'état de la technique précitée, la paroi avant du crochet présente une encoche centrale, dans laquelle vient se loger la saillie de centrage. De part et d'autre de cette encoche centrale, la paroi avant du crochet présente des portions latérales qui sont respectivement en appui contre chacune des deux portions latérales de la paroi arrière de l'oreille situées de part et d'autre de la saillie de centrage.

Ces colliers de l'état de la technique donnent satisfaction, mais la Demanderesse s'est aperçue qu'ils pourraient encore être améliorés pour augmenter les efforts de serrage. En effet, dans les colliers qui viennent d'être décrits, les efforts de serrage s'exercent seulement sur les portions latérales de la paroi avant du crochet et de la partie arrière de l'oreille qui sont en contact, mais pas sur l'intégralité de la largeur de la paroi avant du crochet. De plus, en elle-même, la présence de l'encoche tend à affaiblir la résistance mécanique de la paroi avant du crochet, notamment en raison de la concentration des contraintes dans la zone de découpe correspondant à l'encoche. Ceci est dû au fait que la matière manque sur cette paroi avant et, de plus, au fait que l'encoche est en général d'assez petite dimension et présente localement une conformation anguleuse ou avec une courbure très forte, régions dans lesquelles les efforts d'écrouissage sont très importants.

L'invention a pour but d'améliorer encore l'état de la technique précité en remédiant substantiellement aux inconvénients qui viennent d'être évoqués, tout en permettant un centrage efficace du crochet par rapport à l'oreille.

Ce but est atteint grâce au fait que la paroi avant du crochet présente une portion centrale, qui va en s'avançant vers l'avant de la tête du crochet vers le bord en avancée de ladite portion centrale et deux portions latérales en retrait par rapport à ladite portion centrale.

Avec l'invention, la portion centrale de la paroi avant du crochet coopère parfaitement avec la saillie de centrage, tout en étant dépourvue d'encoche. Ce sont donc non seulement les portions latérales de la paroi avant du crochet, mais également cette portion centrale qui contribuent à l'effort de serrage, en coopérant avec la partie arrière de l'oreille, en plusieurs points. Il en résulte que les efforts de serrage sont mieux répartis que dans l'état de la technique. Ainsi, la coopération entre la paroi avant du crochet et la partie arrière de l'oreille concerne une plus grande surface de contact.

De plus, dans la mesure où c'est, non par une encoche, mais par une conformation en avancée de la portion centrale, que la paroi avant du crochet coopère avec la partie arrière de l'oreille, la tête du crochet située entre sa paroi avant et sa paroi supérieure, est conformée de manière homogène sur toute sa largeur, de sorte que les efforts d'écrouissage sont parfaitement répartis.

Selon une configuration avantageuse, à l'état serré du collier, la distance radiale entre le centre du collier et le bord de ladite paroi avant dans ladite portion centrale, est supérieure à la distance radiale entre le centre du collier et le bord de la paroi avant dans lesdites portions latérales.

Selon cette configuration, en vue depuis l'avant, le bord de la paroi avant du crochet présente une forme légèrement concave. Ceci facilite l'accrochage, car cette forme concave permet en particulier à un outil de serrage dont l'une des mâchoires prend appui derrière le crochet, d'avoir son autre mâchoire qui prend appui derrière l'oreille, à la base de cette dernière, en s'insérant dans la concavité du bord de la paroi avant du crochet à l'état serré du collier. En d'autres termes, la présence de cette autre mâchoire de l'outil de serrage ne nuit aucunement à l'accrochage du crochet sur l'oreille.

Selon une autre configuration avantageuse, à l'état serré du collier, la distance radiale entre le centre du collier et le bord de ladite paroi avant dans ladite portion centrale, est tout au plus sensiblement égale à la distance radiale entre le centre du collier et le bord de la paroi avant dans lesdites portions latérales.

Dans ce cas, en vue depuis l'avant, le bord de la paroi avant du crochet est rectiligne ou légèrement convexe. Cette conformation est particulièrement adaptée au cas où la ceinture présente, à l'arrière de l'oreille, un organe d'appui pour une mâchoire de l'outil de serrage, tel qu'un bossage, distinct de la partie arrière de l'oreille.

Avantageusement, les portions latérales de la paroi avant du crochet sont rentrées sous le crochet en étant repliées en biais par rapport à la direction longitudinale de la ceinture et l'une vers l'autre, et la paroi arrière de l'oreille présente deux tronçons en biais aptes à respectivement coopérer avec chacun desdits côtés repliés.

Dans ce cas, la face interne de la paroi avant du crochet présente une forme qui se referme sur elle-même, un peu à la manière d'une portion de sphère. Du fait de la présence de deux tronçons en biais tournés l'un vers l'autre, les efforts de serrage sont ramenés vers l'axe longitudinal de la ceinture. Avantageusement, les deux tronçons en biais sont symétriques de manière à sensiblement centrer les efforts de serrage sur cet axe longitudinal. Il en résulte une grande qualité de serrage et, notamment, un centrage parfait du crochet sur l'oreille, avec une tendance au recentrage si, lors du serrage, ces deux éléments sont initialement légèrement décentrés l'un par rapport à l'autre.

L'invention concerne également un procédé de fabrication d'un collier de serrage, dans lequel on réalise une ceinture métallique à partir d'au moins une bande métallique que l'on enroule sur elle-même, on forme, au voisinage d'une première extrémité de la ceinture, une oreille saillante et on réalise une saillie de centrage sur une partie arrière de base de cette oreille, et on forme au voisinage d'une deuxième extrémité un crochet destiné à être accroché sur l'oreille pour maintenir le collier à l'état serré par retenue de la paroi avant du crochet derrière l'oreille.

Un procédé de ce type est connu pour fabriquer les colliers selon l'art antérieur précédemment cité. Dans ce procédé connu, on réalisait une encoche dans le bord libre de la paroi avant du crochet, pour que la saillie de centrage de la partie arrière de l'oreille vienne s'insérer dans cette encoche à l'état serré du collier. La présence de cette encoche impliquait toutefois les inconvénients précités. L'invention vise à proposer un procédé de fabrication qui permette d'obtenir un collier sensiblement exempt de ces inconvénients.

Ce but est atteint grâce au fait que, pour former la paroi avant du crochet, on déforme le bout de bande qui, après formation du crochet, formera la paroi avant de ce crochet, de telle sorte qu'une portion centrale de ladite paroi avant s'avance vers l'avant de la tête du crochet vers le bord libre en avancée de ladite portion centrale, tout en rentrant sous le crochet les portions latérales de ladite paroi avant en les disposant ainsi en retrait par rapport à ladite portion centrale.

Avec le procédé de l'invention, il n'est pas nécessaire de réaliser une encoche dans la paroi avant du crochet pour permettre le centrage de ce dernier sur la saillie de centrage de l'arrière de l'oreille. Grâce à l'invention, on peut réaliser le centrage sans former une telle encoche, mais en faisant en sorte que la paroi avant du crochet s'avance vers l'avant à mesure qu'elle se rapproche de son bord libre.

Avantageusement, on déforme le bout de bande par emboutissage.

Il s'agit d'un moyen extrêmement simple de déformer le bout de bande pour réaliser la paroi avant du crochet. De plus, par rapport à l'art antérieur, une seule passe peut suffire pour à la fois former la paroi avant du crochet et la conformer de manière à permettre le centrage sur la saillie de centrage de la partie arrière de l'oreille. Dans l'art antérieur, il fallait réaliser deux passes d'outil, soit une première passe pour former l'encoche et une deuxième passe pour plier la paroi avant.

Avantageusement, avant de déformer le bout de bande, on coupe le bord dudit bout libre selon une courbe continue dont le rayon de courbure est de sens constant. Le rayon de courbure moyen de la courbe est alors avantageusement au moins égal à 1.5 fois la largeur de la bande.

Le rayon de courbure est important pour que la concavité ou la convexité de la courbe précitée soit extrêmement faible. Il peut même s'agir d'un rayon de courbure infini, auquel cas le bord du bout de bande est rectiligne. Quoiqu'il en soit, du fait de ce rayon de courbure important, il n'existe pas en dehors des points de raccordement du bord avant du crochet avec ses côtés, de zone de la paroi avant du crochet qui soit localement pourvue de points anguleux ou à très forte courbure.

Selon une première possibilité avantageuse, on déforme le bout de bande de telle sorte que, à l'état serré du collier, la distance radiale entre le centre du collier et le bord de ladite paroi avant dans ladite portion centrale, est supérieure à la distance radiale entre le centre du collier et le bord de la paroi avant dans lesdites portions latérales.

Selon une deuxième possibilité avantageuse, on déforme le bout de bande de telle sorte que, à l'état serré du collier, la distance radiale entre le centre du collier et le bord de ladite paroi avant dans ladite portion centrale, est tout au plus sensiblement égale à la distance radiale entre le centre du collier et le bord de la paroi avant dans lesdites portions latérales.

Avantageusement, on rentre sous le crochet les portions latérales de la paroi avant en repliant ces portions latérales en biais par rapport à la direction longitudinale de la bande, et l'une vers l'autre.

Avantageusement, on replie les portions latérales selon deux lignes de pliure respectives qui sont symétriques par rapport à l'axe longitudinal de la bande.

L'invention sera bien comprise et ses avantages apparaîtront mieux à la lecture de la description détaillée qui suit, d'un mode de réalisation représenté à titre d'exemple non limitatif. La description se réfère aux dessins annexés sur lesquels :
- la figure 1 est une vue de côté d'un collier de serrage selon l'invention, pour une première variante de réalisation;
- la figure 1A est un agrandissement de la figure 1, dans la région du bord du crochet ;
- la figure 2A est une vue de dessus de l'oreille, selon la flèche IIA de la figure 1;
- la figure 2B est une vue de dessus du crochet du collier de la figure 1, prise selon la flèche IIB de la figure 1;
- la figure 2C est une vue analogue à la figure IIA, pour une variante de réalisation de l'oreille;
- la figure 3 montre un collier de serrage selon l'invention, selon une autre variante;
- la figure 4 est une vue en perspective de la portion de bande qui comporte le crochet, prise de dessous;
- la figure 5 est une vue en coupe longitudinale de la portion de bande qui comporte le crochet, avant son enroulement;
- la figure 6 est une vue de dessous du crochet, prise selon flèche VI de la figure 1;
- la figure 7 montre en vue de dessus, une portion de bande avant la formation du crochet à l'extrémité de cette portion; et
- la figure 8 illustre l'emboutissage d'un bout de bande pour former le bord avant du crochet.

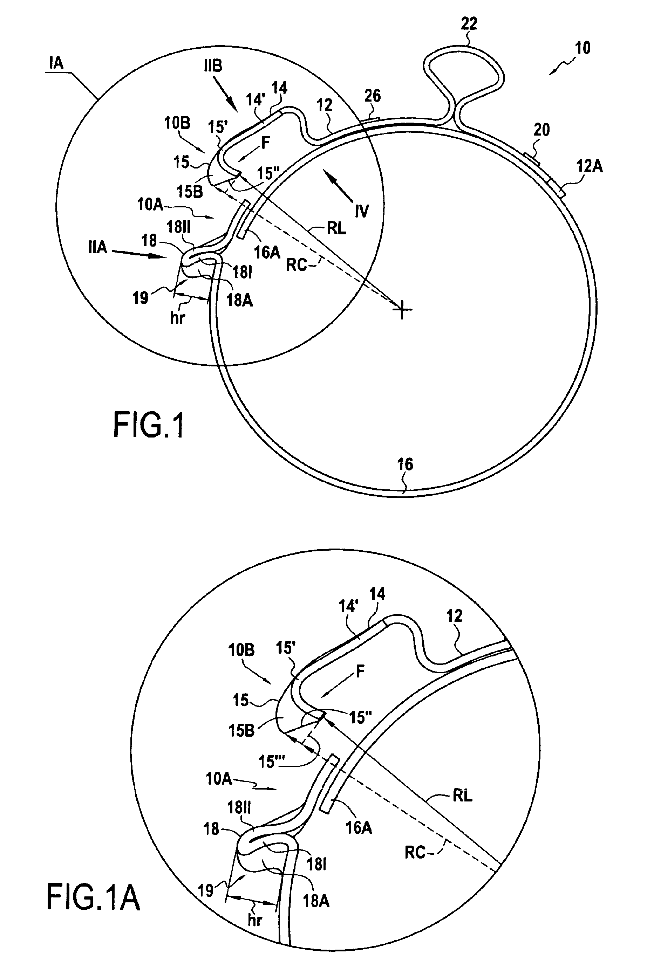

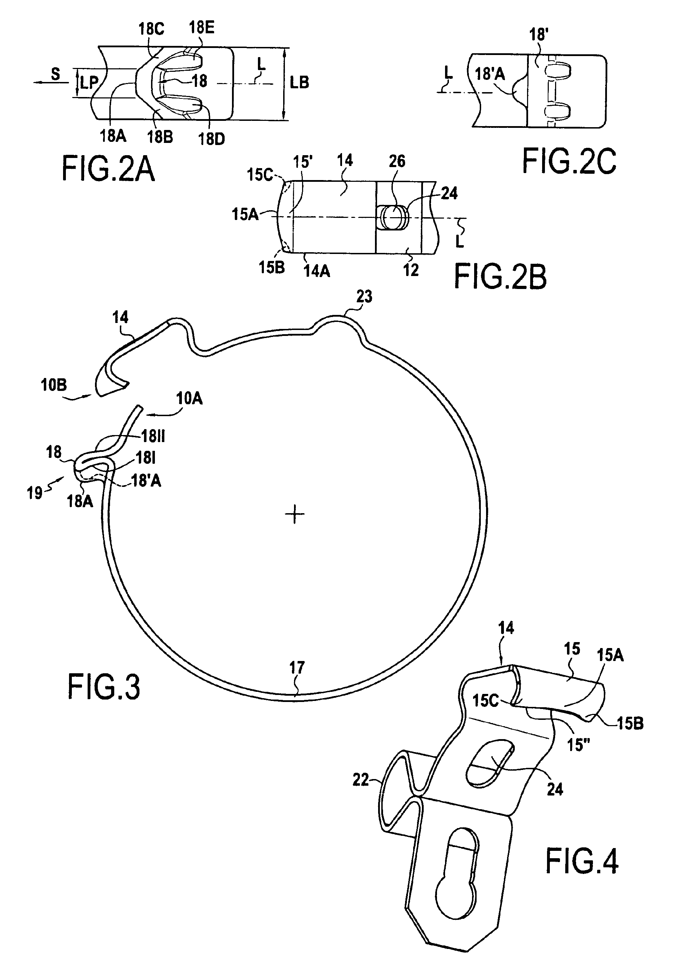

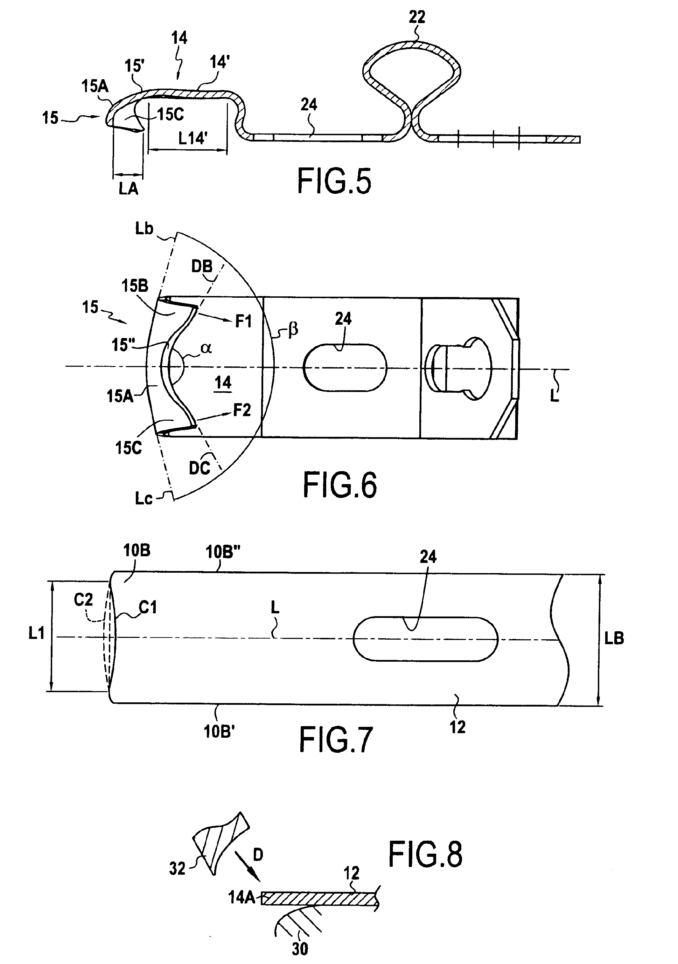

Le collier de la figure 1 comporte une ceinture 10 formée de deux portions de bande fixées l'une à l'autre. Il s'agit respectivement d'une première portion de bande 12 dont une extrémité porte un crochet 14 et une deuxième portion de bande 16 dont une extrémité porte une oreille 18. En fait, la première portion de bande 12 comporte une extrémité 12A fixée sur la deuxième portion de bande 16 et une extrémité libre, correspondant à la deuxième extrémité 10B de la ceinture 10, à laquelle est formé le crochet 14. La deuxième portion de bande 16 est enroulée sur elle-même sur plus de 360°, entre son extrémité intérieure 16A, située sous le crochet 14, et son extrémité opposée 10A, qui forme la première extrémité de la ceinture 10 et au voisinage de laquelle est formée l'oreille 18. Ainsi, le tronçon terminal de la deuxième portion de bande 16 qui aboutit à son extrémité 16A forme une bavette, assurant la continuité de serrage sur l'objet serré par le collier. La première portion de bande 12 présente, entre sa première extrémité 12A et le crochet 14, une zone de fixation à la deuxième portion de bande 16, par exemple un rivet 20, une réserve d'élasticité 22, et une fenêtre 24 (voir figures 2B et 5). La deuxième portion de bande 16 présente un ergot 26 qui fait saillie dans cette fenêtre 24.

Le collier de la figure 3 est analogue à celui de la figure 1, à ceci près, que la ceinture est formée dans une portion de bande unique 17, enroulée sur elle-même depuis sa première extrémité 10A au voisinage de laquelle est formée l'oreille 18, jusqu'à sa deuxième extrémité 10B à laquelle est formé le crochet 14. Cette portion de bande unique présente également une réserve d'élasticité 23 située à l'arrière du crochet 14. On voit que la première extrémité 10A se prolonge au-delà de l'oreille 18 pour former une bavette qui, à l'état serré, s'étend sous le crochet 14 et assure donc une continuité d'appui sur l'objet serré par le collier. L'invention peut bien entendu s'appliquer à des colliers dépourvus d'une telle bavette.

Sur les figures 1 et 2, on voit que la partie arrière 19 de l'oreille présente une saillie de centrage 18A. En général, cette saillie est centrée sur l'axe longitudinal L de la ceinture. La partie arrière 19 de l'oreille est celle qui est opposée à l'extrémité libre de la première extrémité 10A de la ceinture.

De son côté, le crochet 14 présente une paroi avant 15 qui s'étend en se rapprochant radialement du centre C du collier à partir de la tête 15' du crochet, laquelle forme l'extrémité avant de la paroi supérieure 14' du crochet 14. La paroi supérieure du crochet est quant à elle orientée sensiblement selon la direction périphérique de la ceinture. Pour accrocher le crochet sur l'oreille, ce crochet est déplacé par rapport à l'oreille 18 dans un sens F indiqué sur la figure 1 jusqu'à ce que la paroi avant 15 du crochet vienne se loger derrière l'oreille 18.

La figure 2A montre, en vue de dessus, la conformation de l'oreille 18. On voit qu'elle présente sensiblement une forme en V dont la pointe 18A est tournée dans le sens S allant en s'éloignant du crochet 14. Ce sens est le même que le sens F de déplacement du crochet par rapport à l'oreille pour l'accrochage. La pointe 18A du V est sensiblement centrée sur l'axe longitudinal L de la bande métallique de la ceinture, et de part et d'autre de cette pointe 18A, l'oreille présente des branches respectivement 18B et 18C symétriques. A l'avant de l'oreille 18, celle-ci présente également des nervures de rigidification, respectivement 18D et 18E. La pointe du V est émoussée en étant arrondie ou conformée en méplat, et occupe globalement une largeur LP qui correspond environ à 1/4 à 1/3 de la largeur totale LB de la bande. La saillie de centrage est formée par la pointe émoussée du V. Lorsque cette pointe forme un méplat comme représenté, la forme en V peut également être définie comme une forme en U à branches divergentes et symétriques, la base du U formant le méplat 18A.

De son côté, la paroi avant du crochet présente une portion centrale 15A et deux portions latérales, respectivement 15B et 15C situées de part et d'autre de cette portion centrale. La portion centrale 15A est centrée sur l'axe longitudinal L précédemment évoqué. Ceci est visible en vue de dessus, mais, comme on le comprend en comparant les figures 1 et 2B, la tête 15' du crochet quant à elle est sensiblement rectiligne dans le sens transversal à la direction longitudinale de la bande dans laquelle elle est formée. C'est donc à mesure que l'on se rapproche du bord libre 15" que la portion centrale 15A s'avance vers l'avant, alors que les portions latérales 15B sont en retrait par rapport à elle. Ainsi, globalement, la paroi avant 15 a la forme d'une bosse dont la portion saillante est dans la partie centrale et à distance de la tête 15' du crochet. La tête 15' du crochet est définie comme formant la jonction entre la paroi supérieure 14' du crochet (cette paroi supérieure s'étendant sensiblement parallèlement à la direction circonférentielle de la ceinture), et la paroi avant 15 de ce crochet. Cette tête peut avoir une forme légèrement incurvée vers l'avant, mais la portion en avancée 15A s'étend encore davantage vers l'avant.

On a indiqué précédemment que l'oreille 18 est formée par un double pli, respectivement 18I et 18II qui, en vue dessus, a une forme en V pour que sa pointe forme la saillie de centrage. On pourrait toutefois, comme dans l'art antérieur et comme représenté sur la figure 2C, réaliser l'oreille selon un double pli orienté essentiellement dans la direction transversale à la bande, mais avec le pli arrière pourvu d'un bossage formant la saillie de centrage 18'A. Ce bossage est également représenté en traits interrompus sur la figure 3. Le crochet du collier selon l'invention s'applique aussi bien que l'oreille ait la forme de l'oreille 18 des figures 1 et 3, ou celle de l'oreille 18' de la figure 2C. L'oreille pourrait également avoir une forme ouverte, par exemple comme dans la demande de brevet EP 1 352 192 avec un pli arrière ayant une forme adaptée à coopérer avec la paroi avant du crochet.

Sur la figure 1, on a indiqué la distance radiale RC entre le centre C du collier et le bord 15" de la paroi avant 15 du crochet dans la portion centrale 15A de cette paroi. On a indiqué également la distance radiale RL entre le centre C et le bord de la paroi avant 15, aux extrémités des portions latérales 15B et 15C. On voit, sur la figure 1, que la distance radiale RC est supérieure à la distance radiale RL. En effet, comme on le voit sur la figure 4, en vue de devant, le bord libre 15" a une forme concave, le fond de la concavité étant situé dans la portion centrale 15A, par opposition aux portions latérales 15B et 15C.

Comme on le voit mieux sur la figure 1A, le bord de la paroi avant 15 pourrait toutefois être conformé comme indiqué en traits interrompus et désigné par la référence 15"', en faisant en sorte que la distance radiale de ce bord au centre C du collier soit sensiblement la même que l'on se trouve dans la portion centrale ou dans les portions latérales. Selon la conformation de l'oreille, on pourrait même choisir que la distance radiale soit légèrement plus faible dans la portion centrale que dans les portions latérales.

Comme on le comprend mieux au vu des figures 4, 5 et 6, les portions latérales 15B et 15C de la paroi avant 15 du crochet sont rentrées sous ce crochet. Ainsi qu'on l'a indiqué sur la figure 6, elles sont rentrées en étant repliées en biais par rapport à la direction L de l'axe longitudinal de la ceinture. On a indiqué par les flèches F1 et F2 les directions dans lesquelles ces portions latérales, respectivement 15B et 15C sont rentrées, et elles se trouvent sensiblement situées sur des lignes en biais respectivement DB et DC. L'angle α entre les lignes DB et DC est avantageusement de l'ordre de 90° à 120°. Les portions latérales sont repliées selon des lignes de pliage, respectivement Lb et Lc qui sont sensiblement symétriques par rapport à l'axe longitudinal L. L'angle β entre ces lignes Lb et Lc est avantageusement de l'ordre de 110° à 160°, de préférence de l'ordre de 120° à 130°. Ainsi, les portions latérales 15B et 15C sont bien aptes à coopérer avec les tronçons en biais respectivement formés par les branches 18B et 18C du V que forme cette oreille en vue de dessus (voir figure 2A).

Sur la coupe de la figure 5, on voit également l'amplitude du repli de la portion latérale 15C par rapport à la portion centrale 15A de la paroi avant 15 du crochet 14. Cette amplitude de repli LA est de l'ordre de environ 1/4 de la longueur L14' de la paroi supérieure 14' du crochet 14. Comme indiqué précédemment, les branches 18B et 18C du V sont symétriques par rapport à l'axe longitudinal de la ceinture, de même que les portions latérales 15B et 15C sont symétriques par rapport à cet axe longitudinal. Ceci permet de ramener les efforts de serrage sensiblement sur cet axe.

La figure 7 montre une portion de bande 12 à plat, avant la formation du crochet dans une portion d'extrémité de cette portion de bande. On voit que le bout 10B de cette portion de bande présente sur la quasi-totalité de sa largeur LB, une courbe continue C1 dont le rayon de courbure est de sens constant. En réalité, la largeur de bande L1 sur laquelle s'étend cette courbe C1 est de l'ordre de 85 à 95 % de la largeur totale LB de la bande. Seules les régions tout à fait marginales voisines des marges 10B' et 10B" de la portion de bande ont des courbures différentes. Ces régions marginales forment les coins entre les marges de la bande et son extrémité libre. En quelque sorte, les jonctions de la courbe CI avec les marges 10B' et 10B" forment des coins émoussés, pour éviter que, localement, les efforts d'écrouissage soient trop importants. Le rayon de courbure R de la courbe C1 est constant. Il est au moins égal à 1,5 fois la largeur LB de la bande, et peut être bien supérieur puisque, comme indiqué en traits interrompus, le bord peut même être rectiligne. Il peut également être légèrement convexe, comme indiqué par la courbe C2, auquel cas il aura également un grand rayon de courbure de l'ordre d'au moins 1,5 la largeur LB de la bande.

Pour fabriquer le collier de la figure 1, on forme respectivement le crochet 14 et l'oreille 18 aux extrémités des deux portions de bande 12 et 16. En général, le crochet et l'oreille sont formés alors que ces portions de bande sont à plat, puis ces bandes sont roulées et fixées l'une à l'autre.

Pour réaliser le collier de la figure 3, on forme le crochet 14 de l'oreille 18 au voisinage des extrémités respectives de la même portion de bande 17, alors que celle-ci est à plat, puis on roule cette bande pour former le collier.

Par convenance, en référence au procédé de fabrication du collier de serrage, on indique le crochet 14 et l'oreille 18 sont formés aux extrémités de la ceinture métallique, ce qui ne signifie pas qu'ils ne sont formés qu'une fois que cette ceinture est elle-même conformée en ceinture, par roulage de la ou des portions de bande dont elle est constituée. Au contraire, comme on l'a indiqué, le crochet et l'oreille peuvent être formés à plat.

En formant l'oreille saillante 18, on réalise une saillie de centrage sur la partie arrière de cette oreille, soit en conformant le pli arrière de l'oreille avec une configuration en V en vue de dessus (figure 2A) soit en formant le pli arrière du double pli avec un bossage 18'A (figure 2C).

La saillie de centrage 18A ou 18'A peut s'étendre sensiblement sur toute la hauteur radiale hr (voir figure 1) de l'oreille 18 ou au contraire ne s'étendre que sur une portion de cette hauteur radiale (voir référence 18'A sur la figure 3).

Le crochet 14 est formé à plat à partir de la portion de bande représentée sur la figure 7. Pour former la paroi avant 15 du crochet 14, on déforme le bout de bande 14A qui, après formation du crochet, formera la paroi avant 15 de ce crochet, de sorte qu'une portion centrale de la paroi en avancée, s'avance vers l'avant depuis la tête 15' du crochet, vers le bord libre 15".

Comme on l'a indiqué précédemment, cette déformation est avantageusement obtenue par emboutissage. Par exemple, sur la figure 8, on illustre cet emboutissage. La portion de bande 12 est disposée sur une matrice d'emboutissage 30, avec le bout de bande 14A servant à former la paroi avant qui étend surplomb. Le poinçon d'emboutissage 32 est déplacé dans le sens D indiqué sur la figure 8 pour venir frapper la bande contre la matrice, de manière à conformer la paroi avant 15.

Avantageusement, en formant cette paroi avant, on replie les portions latérales 15B et 15C par rapport à la portion centrale en avancée, selon des lignes de pliure lb et lc (voir la figure 6).

## Revendications

1. Collier de serrage comprenant une ceinture métallique (10 ; 17) ayant, au voisinage d'une première extrémité (10A), une oreille saillante (18 ; 18') et, au voisinage d'une deuxième extrémité (10B), un crochet (14) présentant une paroi avant (15) destinée à être retenue derrière l'oreille alors que le crochet (14) est accroché sur l'oreille (18 ; 18') pour maintenir le collier à l'état serré, une partie arrière (19) de l'oreille (18, 18'), opposée au crochet (14), présentant une saillie de centrage (18A, 18'A),
**caractérisé en ce que** la paroi avant (15) du crochet (14) présente une portion centrale (15A), qui va en s'avançant vers l'avant de la tête (15') du crochet vers le bord (15") en avancée de ladite portion centrale et deux portions latérales (15B, 15C) en retrait par rapport à ladite portion centrale.

2. Collier selon la revendication 1, **caractérisé en ce que**, à l'état serré du collier, la distance radiale (RC) entre le centre (C) du collier et le bord (15") de ladite paroi avant (15) dans ladite portion centrale (15A), est supérieure à la distance radiale (RL) entre le centre (C) du collier et le bord de la paroi avant (15) dans lesdites portions latérales (15B, 15C).

3. Collier selon la revendication 1, **caractérisé en ce que**, à l'état serré du collier, la distance radiale (RC) entre le centre (C) du collier et le bord de ladite paroi avant dans ladite portion centrale, est tout au plus sensiblement égale à la distance radiale entre le centre du collier et le bord de la paroi avant dans lesdites portions latérales.

4. Collier selon l'une quelconque des revendications 1 à 3, **caractérisé en ce que** les portions latérales (15B, 15C) de la paroi avant (15) du crochet (14) sont rentrées sous le crochet (14) en étant repliées en biais par rapport à la direction longitudinale (L) de la ceinture et l'une vers l'autre, et **en ce que** la paroi arrière (19) de l'oreille (18 ; 18') présente deux tronçons en biais (18B, 18C) aptes à respectivement coopérer avec chacune desdites portions latérales repliées (15B, 15C).

5. Collier selon la revendication 4, **caractérisé en ce que** les portions latérales (15B, 15C) sont repliées selon des lignes de pliure (Lb, Lc) respectives qui sont symétriques par rapport à la direction longitudinale de la ceinture.

6. Collier selon la revendication 4 ou 5, **caractérisé en ce que** l'oreille (18) est formée par un double pli qui présente, en vue de dessus, une forme sensiblement en V dont la pointe (18A) est tournée dans le sens allant en s'éloignant du crochet (14).

7. Procédé de fabrication d'un collier de serrage, dans lequel on réalise une ceinture métallique (10) à partir d'au moins une bande métallique (12, 16) que l'on enroule sur elle-même, on forme au voisinage d'une première extrémité (10A) de la ceinture une oreille saillante (18, 18') et on réalise une saillie de centrage (18A, 18'A) sur une partie arrière de base de cette oreille, et on forme au voisinage d'une deuxième extrémité (10B) un crochet (14) destiné à être accroché sur l'oreille pour maintenir le collier à l'état serré par retenue de la paroi avant (15) du crochet (14) derrière l'oreille (18, 18'),
**caractérisé en ce que**, pour former la paroi avant (15) du crochet (14), on déforme le bout de bande (14A) qui, après formation du crochet (14), formera la paroi avant (15) de ce crochet, de telle sorte qu'une portion centrale (15A) de ladite paroi avant (15) s'avance vers l'avant de la tête (15') du crochet (14) vers le bord libre (15") en avancée de ladite portion centrale (15A), tout en rentrant sous le crochet (14) les portions latérales (15B, 15C) de ladite paroi avant en les disposant ainsi en retrait par rapport à ladite portion centrale.

8. Procédé selon la revendication 7, **caractérisé en ce que** on déforme le bout de bande (14A) par emboutissage.

9. Procédé selon la revendication 7 ou 8, **caractérisé en ce que**, avant de déformer le bout de bande (14A), on coupe le bord dudit bout de bande selon une courbe continue dont le rayon de courbure (C1, C2) est de sens constant.

10. Procédé selon la revendication 9, **caractérisé en ce que** le rayon de courbure moyen (R) de la courbe est au moins égal à 1.5 fois la largeur de la bande.

11. Procédé selon l'une quelconque des revendications 7 à 10, **caractérisé en ce que** on déforme le bout de bande (14A) de telle sorte que, à l'état serré du collier, la distance radiale (RC) entre le centre du collier et le bord (15") de ladite paroi avant (15) dans ladite portion centrale (15A), est supérieure à la distance radiale (RL) entre le centre du collier et le bord de la paroi avant dans lesdites portions latérales (15B, 15C).

12. Procédé selon l'une quelconque des revendications 7 à 10, **caractérisé en ce que** on déforme le bout de bande (14A) de telle sorte que, à l'état serré du collier, la distance radiale entre le centre du collier et le bord de ladite paroi avant dans ladite portion centrale, est tout au plus sensiblement égale à la distance radiale entre le centre du collier et le bord de la paroi avant dans lesdites portions latérales.

13. Procédé selon l'une quelconque des revendications 7 à 12, **caractérisé en ce qu'**on rentre sous le crochet (14) les portions latérales (15B, 15C) de la paroi avant (15) en repliant ces portions latérales en biais par rapport à la direction longitudinale (L) de la bande, et l'une vers l'autre.

14. Procédé selon la revendication 13, **caractérisé en ce qu'**on replie les portions latérales selon deux lignes de pliure (Lb, Lc) respectives qui sont symétriques par rapport à l'axe longitudinal de la bande.

## Patentansprüche

1. Klemmschelle, umfassend einen Metallring (10; 17), der in der Nähe eines ersten Endes (10A) eine vorspringende Öse (18; 18') und in der Nähe eines zweiten Endes (10B) einen Haken (14) hat, welcher eine vordere Wand (15) aufweist, die dazu bestimmt ist, hinter der Öse gehalten zu werden, während der Haken (14) an der Öse (18; 18') festgehakt ist, um die Schelle im festgezogenen Zustand zu halten, wobei ein hinterer Teil (19) der Öse (18, 18'), welcher von dem Haken (14) abgewandt ist, einen Zentriervorsprung (18A, 18'A) aufweist,
**dadurch gekennzeichnet, daß** die vordere Wand (15) des Hakens (14) einen mittleren Abschnitt (15A), der von dem Kopf (15') des Hakens nach vorne in Richtung des vorspringenden Randes (15") des mittleren Abschnitts vorspringt, sowie zwei gegenüber dem mittleren Abschnitt zurückspringende Seitenabschnitte (15B, 15C) aufweist.

2. Schelle nach Anspruch 1, **dadurch gekennzeichnet, daß** im festgezogenen Zustand der Schelle der radiale Abstand (RC) zwischen dem Mittelpunkt (C) der Schelle und dem Rand (15") der vorderen Wand (15) in dem mittleren Abschnitt (15A) größer als der radiale Abstand (RL) zwischen dem Mittelpunkt (C) der Schelle und dem Rand der vorderen Wand (15) in den Seitenabschnitten (15B, 15C) ist.

3. Schelle nach Anspruch 1, **dadurch gekennzeichnet, daß** im festgezogenen Zustand der Schelle der radiale Abstand (RC) zwischen dem Mittelpunkt (C) der Schelle und dem Rand der vorderen Wand in dem mittleren Abschnitt höchstens im wesentlichen gleich dem radialen Abstand zwischen dem Mittelpunkt der Schelle und dem Rand der vorderen Wand in den Seitenabschnitten ist.

4. Schelle nach einem der Ansprüche 1 bis 3, **dadurch gekennzeichnet, daß** die Seitenabschnitte (15B, 15C) der vorderen Wand (15) des Hakens (14) unter den Haken (14) eingeschlagen sind, indem sie gegenüber der Längsrichtung (L) des Rings sowie aufeinander zu schräg umgebogen sind, und daß die hintere Wand (19) der Öse (18; 18') zwei schräge Abschnitte (18B, 18C) aufweist, die geeignet sind, jeweils mit einem der umgebogenen Seitenabschnitte (15B, 15C) zusammenzuwirken.

5. Schelle nach Anspruch 4, **dadurch gekennzeichnet, daß** die Seitenabschnitte (15B, 15C) entlang von jeweiligen Falzlinien (Lb, Lc), die in Bezug auf die Längsrichtung des Rings symmetrisch sind, umgebogen sind.

6. Schelle nach Anspruch 4 oder 5, **dadurch gekennzeichnet, daß** die Öse (18) durch einen Doppelfalz gebildet ist, welcher in Draufsicht im wesentlichen eine V-Form aufweist, deren Spitze (18A) in die sich von dem Haken (14) entfernende Richtung gewandt ist.

7. Verfahren zur Herstellung einer Klemmschelle, wobei ein Metallring (10) aus wenigstens einem Metallband (12, 16), das auf sich selbst gerollt wird, ausgebildet wird, in der Nähe eines ersten Endes (10A) des Rings eine vorspringende Öse (18, 18') gebildet wird und ein Zentriervorsprung (18A, 18'A) an einem hinteren Basisteil dieser Öse ausgebildet wird und in der Nähe eines zweiten Endes (10B) ein Haken (14) gebildet wird, welcher dazu bestimmt ist, an der Öse festgehakt zu werden, um durch Festhalten der vorderen Wand (15) des Hakens (14) hinter der Öse (18, 18') die Schelle in dem festgezogenen Zustand zu halten,
**dadurch gekennzeichnet, daß** zur Bildung der vorderen Wand (15) des Hakens (14) das Bandende (14A), welches nach Bildung des Hakens (14) die vordere Wand (15) dieses Hakens bildet, derart verformt wird, daß ein mittlerer Abschnitt (15A) der vorderen Wand (15) von dem Kopf (15') des Hakens (14) nach vorne in Richtung des vorspringenden freien Randes (15") des mittleren Abschnitts (15A) vorspringt, und gleichzeitig die Seitenabschnitte (15B, 15C) der vorderen Wand unter den Haken (14) eingeschlagen werden, wodurch sie gegenüber dem mittleren Abschnitt zurückspringend angeordnet werden.

8. Verfahren nach Anspruch 7, **dadurch gekennzeichnet, daß** das Bandende (14A) durch Tiefziehen verformt wird.

9. Verfahren nach Anspruch 7 oder 8, **dadurch gekennzeichnet, daß** vor dem Verformen des Bandendes (14A) der Rand des Bandendes entlang einer stetigen Kurve, deren Krümmungsradius (C1, C2) eine konstante Richtung aufweist, geschnitten wird.

10. Verfahren nach Anspruch 9, **dadurch gekennzeichnet, daß** der mittlere Krümmungsradius (R) der Kurve wenigstens gleich dem 1,5-fachen der Breite des Bandes ist.

11. Verfahren nach einem der Ansprüche 7 bis 10, **dadurch gekennzeichnet, daß** das Bandende (14A) derart verformt wird, daß im festgezogenen Zustand der Schelle der radiale Abstand (RC) zwischen dem Mittelpunkt der Schelle und dem Rand (15") der vorderen Wand (15) in dem mittleren Abschnitt (15A) größer als der radiale Abstand (RL) zwischen dem Mittelpunkt der Schelle und dem Rand der vorderen Wand in den Seitenabschnitten (15B, 15C) ist.

12. Verfahren nach einem der Ansprüche 7 bis 10, **dadurch gekennzeichnet, daß** das Bandende (14A) derart verformt wird, daß im festgezogenen Zustand der Schelle der radiale Abstand zwischen dem Mittelpunkt der Schelle und dem Rand der vorderen Wand in dem mittleren Abschnitt höchstens im wesentlichen gleich dem radialen Abstand zwischen dem Mittelpunkt der Schelle und dem Rand der vorderen Wand in den Seitenabschnitten ist.

13. Verfahren nach einem der Ansprüche 7 bis 12, **dadurch gekennzeichnet, daß** die Seitenabschnitte (15B, 15C) der vorderen Wand (15) unter den Haken (14) eingeschlagen werden, indem diese Seitenabschnitte gegenüber der Längsrichtung (L) des Bandes sowie aufeinander zu schräg umgebogen werden.

14. Verfahren nach Anspruch 13, **dadurch gekennzeichnet, daß** die Seitenabschnitte entlang von zwei jeweiligen Falzlinien (Lb, Lc), die in Bezug auf die Längsachse des Bandes symmetrisch sind, umgebogen werden.

## Claims

1. A clamping collar comprising a metal belt (10; 17) having a projecting lug (18; 18') in the vicinity of a first end (10A), and a hook (14) in the vicinity of a second end (10B), which hook has a front wall (15) designed to be retained behind the lug while the hook (14) is hooked onto the lug (18; 18') in order to maintain the collar in the tightened state, a rear portion (19) of the lug (18, 18') that faces away from the hook (14) having a centering projection (18A, 18'A), said clamping collar being **characterized in that** the front wall (15) of the hook (14) has a central portion (15A) that extends forwards from the head (15') of the hook towards the set-forward edge (15") of said central portion, and two side portions (15B, 15C) set back relative to said central portion.

2. A collar according to claim 1, **characterized in that**, when the collar is in the tightened state, the radial distance (RC) between the centre (C) of the collar and the edge (15") of said front wall (15) in said central portion (15A) is greater than the radial distance (RL) between the centre (C) of the collar and the edge of the front wall (15) in said side portions (15B, 15C).

3. A collar according to claim 1, **characterized in that**, when the collar is in the tightened state, the radial distance (RC) between the centre (C) of the collar and the edge of said front wall in said central portion is substantially no greater than the radial distance between the centre of the collar and the edge of the front wall in said side portions.

4. A collar according to any one of claims 1 to 3, **characterized in that** the side portions (15B, 15C) of the front wall (15) of the hook (14) are brought back under the hook (14) by being folded back in slanting manner relative to the longitudinal direction (L) of the belt and one towards the other, and **in that** the rear wall (19) of the lug (18; 18') has two slanting segments (18B, 18C) suitable for co-operating with respective ones of said folded-back side portions (15B, 15C).

5. A collar according to claim 4, **characterized in that** the side portions (15B, 15C) are folded back along respective fold lines (Lb, Le) that are symmetrical about the longitudinal direction of the belt.

6. A collar according to claim 4 or claim 5, **characterized in that** the lug (18) is formed by a double fold that, seen from above, is substantially V-shaped, the tip (18A) of the V-shape pointing away from the hook (14).

7. A method of manufacturing a clamping collar, which method comprises obtaining a metal belt (10) from at least one metal strip (12, 16) that is looped back on itself, forming a projecting lug (18, 18') in the vicinity of a first end (10A) and forming a centering projection (18A, 18'A) on a rear portion of the base of the lug, and forming a hook (14) at a second end (10B), which hook (14) is designed to be hooked onto the lug in order to maintain the collar in the tightened state by retaining the front wall (15) of the hook (14) behind the lug (18, 18'), said method being **characterized in that**, in order to form the front wall (15) of the hook (14), the method further comprises deforming the strip end (14A) that, after forming the hook (14), forms the front wall (15) of said hook, so that a central portion (15A) of said front wall (15) extends forwards from the head (15') of the hook (14) towards the set-forward free edge (15") of said central portion (15A), while bringing the side portions (15B, 15C) of said front wall back under the hook, thereby disposing them set back relative to said central portion.

8. A method according to claim 7, **characterized in that** the strip end (14A) is deformed by stamping.

9. A method according to claim 7 or claim 8, **characterized in that**, prior to deforming the strip end (14A), the edge of said strip end is cut over a continuous curve of radius of curvature (C1, C2) that is of constant direction.

10. A method according to claim 9, **characterized in that** the mean radius of curvature (R) of the curve is not less than 1.5 times the width of the strip.

11. A method according to any one of claims 7 to 10, **characterized in that** the strip end (14A) is deformed so that, when the collar is in the tightened state, the radial distance (RC) between the centre of the collar and the edge (15") of said front wall (15) in said central portion (15A) is greater than the radial distance (RL) between the centre of the collar and the edge of the front wall in said side portions (15B, 15C).

12. A method according to any one of claims 7 to 10, **characterized in that** the strip end (14A) is deformed so that, when the collar is in the tightened state, the radial distance between the centre of the collar and the edge of said front wall in said central portion is substantially no greater than the radial distance between the centre of the collar and the edge of the front wall in said side portions.

13. A method according to any one of claims 7 to 12, **characterized in that** the side portions (15B, 15C) of the front wall (15) are brought back under the hook (14) by folding said side portions back in slanting manner relative to the longitudinal direction (L) of the strip, and one towards the other.

14. A method according to claim 13, **characterized in that** the side portions are folded back along respective fold lines (Lb, Lc) that are symmetrical about the longitudinal direction of the strip.
